# EUROPEAN PATENT APPLICATION

(11) **EP 1 619 053 A1**
(43) Date of publication of application: **25.01.2006**
(21) Application number: 05015644.7
(22) Date of filing: 19.07.2005
(51) Int. Cl.: B60C 25/00

(54) **Ring extracting and inserting apparatus for tyres**

(30) Priority: 23.07.2004 IT MO20040192
(71) Applicant: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)
(74) Representative: Crugnola, Pietro

(57) **Abstract**

The extracting and inserting apparatus (1), particularly for extracting and inserting a stiff ring (2) from and into a tyre (4) carcass (3) comprises support means (5) arranged to receive said carcass (3), traction and/or thrust means (11) arranged to act on said ring (2), in such a way as to rotate it transversely in relation to said carcass (3) and extract it therefrom or insert it therein.

## Description

The present invention relates to an extracting and inserting apparatus, particularly suitable for extracting and reinserting the stiff internal rings of special tyres known as PAX.

A well-known company that manufactures tyres for vehicles has recently launched on international markets a tyre with a new design that is able to roll along the road even if it is completely deflated, for example due to punctures and without the sides of the tyre being able to leave the edges of the rim on which it is fitted and which contains them transversely, causing dangers of the vehicle skidding.

This tyre appears to be advantageous because, as it enables a vehicle to move easily even when the tyre is flat to reach a garage for repairs, it enables vehicle manufacturers to eliminate the spare tyre.

The tyre in question consists of a carcass substantially of the traditional type inside which a ring is inserted that is suitable for being interposed between the inside of the tread and the fitting groove of the rim on which the tyre is fitted, to support the vehicle when the carcass collapses due to lack of air.

In a more recent embodiment of this tyre, the ring consists of a stiff, preferably metal material and is coated in rubber material, thus being non-deformable.

Accordingly, the operations of extraction and reinsertion of the ring into the carcass, to enable the mechanics to reach inside the latter and perform repairs of any punctures, are extremely awkward and difficult.

Such difficulties are due to the fact that the diameter of the ring is slightly less than the internal diameter of the carcass and this hinders its extraction and reinsertion through the conventional circular side apertures of the sides of the carcass.

Furthermore, there is the fact that the carcass has a structure that does not lend itself to deformation, especially in the zone of the sides, and therefore the passage of the ring through the side apertures, which being wider than them, requires flexure of the sides both towards the exterior and the interior and is rather laborious and awkward.

Lastly, each extraction and reinsertion operation is greatly hindered by the great friction that develops from the inevitable contact between the rubber coating of the ring and the carcass during the phases of the operation.

An object of the invention is to improve the prior art.

Another object of the invention is to make an extracting and inserting apparatus that enables the rings of the respective tyre carcasses to be extracted and reinserted without effort by operators and with substantial ease.

According to the invention, an extracting and inserting apparatus is provided, particularly for extracting or introducing a stiff ring from or into a tyre carcass, characterised in that it comprises support means arranged to receive said carcass, traction and/or thrust means arranged to act on said ring in such a way as to rotate it transversely in relation to said carcass and extract it therefrom or introduce it therein.

Advantageously, said traction and/or thrust means is connected inside said support means by articulation means.

Further features and advantages of the invention will be particularly clear from the detailed description of an extracting and inserting apparatus, illustrated by way of non-limitative example in the attached figures, in which:
Figure 1 is a perspective view of an extracting and inserting apparatus on which a tyre is arranged on which it is necessary to operate;
Figure 2 is a transparent schematic side view of the extracting and inserting apparatus in Figure 1;
Figure 3 shows a detail on enlarged scale of traction and/or thrust means during an extraction phase;
Figure 4 shows a carcass of a tyre resting on the extracting and inserting apparatus in an intermediate extraction phase of an internal stiff ring;
Figure 5 shows the continuation of the extraction phase of Figure 4;
Figure 6 shows the final phase of the extraction of figures 4 and 5;
Figure 7 shows an initial insertion phase of an internal stiff ring into a carcass of a tyre;
Figure 8 shows a conclusive phase of the insertion of figure 7;
Figure 9 shows an enlarged detail of a rod-formed member comprised in the traction and/or thrust means in figure 3.

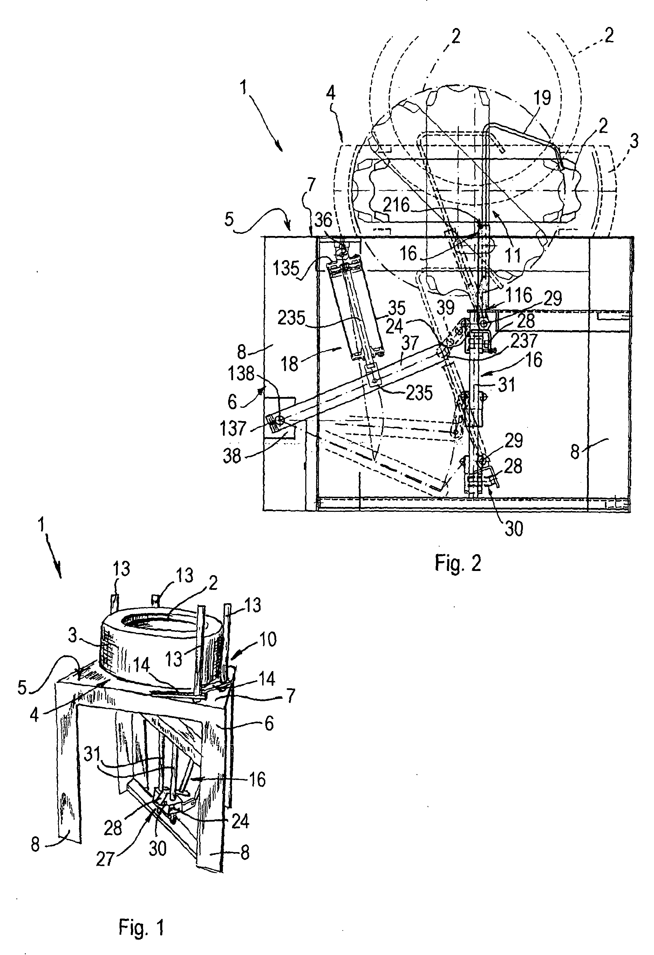

With particular reference to Figure 1, 1 indicates an extracting and inserting apparatus, particularly for extracting and inserting stiff rings 2 from or into tyre 4 carcasses 3. The apparatus 1 comprises means 5 on which the carcasses 3 can be rested that are internally provided with stiff rings 2 and which comprise a frame 6 shaped as a table that has a substantially horizontal upper plane 7 on which the carcasses 3 are rested in a horizontal position and is provided internally with four legs 8 for resting on the ground.

The upper plane 7 has a central aperture 9 that traverses it and is provided with locking means 10 of each carcass 3 resting on the upper plane 7, which is positioned peripherally to the aperture 9.

The latter is aligned on the conventional circular apertures 103 that delimit the sides 203 of the carcasses 3 and through it insertion means 11 or extraction means 11 of the stiff rings 2 pass to rotate them transversely to the carcasses 3 and extract them therefrom or insert them therein.

The means 11 is hinged on the frame 6 below the upper plane 7, in such a way as to be contained inside the overall plan dimensions of the frame 6.

The locking means 10 comprises two pairs of pressing elements that are suitable for taking on two positions, in relation to a first intervention position in which they are pressed in contact with a side of a carcass 3 resting on the upper plane 7 and a rest position in which they are removed from the carcass 3.

The pressing elements are arranged around the opening 9 and in a peripheral zone of the upper plane 7.

Between them a resting zone for the carcasses 3 is defined that is traversed by the aperture 9.

Each pressing element comprises a stem 13 that has a base that is fixed relative to the upper plane 7 and that extends upward.

Along the stem 13 a transverse bar 14 is slideable that has an end provided with a hole 15 engaged on the stem 13 with limited clearance; the bar 14, in addition to sliding along the stem 13, may also rotate around the latter to go to the side of a carcass or to be removed from the latter; in addition, the bar 14 is locked along the stem 13 when it is rotated upwards inasmuch as this is allowed by the clearance existing between the hole 15 and the stem 13.

The means 11 comprises a rod-shaped member 16 that has an end or base 116 that is articulated on the frame 2, underneath the upper plane 7, by articulating means 17 and which passes through the aperture 9.

The rod-shaped member 16 is actuated by alternative movement means 18 that is interposed between the frame 2 and the base 116 and which will be disclosed below.

The end 216 of the rod-shaped element 16 opposite the base 116 is provided with a spike member 19 that is alternatively engaged to extract or insert the stiff rings 2 into the carcasses 3, and at the external end, is provided with a stopper 119 in elastic material.

The rod-shaped member 16 consists of two internal 316 and external 416 telescoping rods between which means 20 is interposed for the adjusting of the total length of the rod-shaped member 16, which comprise a series of slots 21 that are arranged as a comb, which are obtained transversely in the external rod 416 and are connected together by a common longitudinal corridor 22.

The internal rod 316 is provided with a corresponding protruding pin 23 that is suitable for selectively engaging in one of the slots 21, by passing along the corridor 22 and rotation of the internal rod 316 in relation to the external rod 416.

The articulating means 17 is placed inside the outline of the frame 6 to contain the overall dimensions and comprises a prismatic body 24 which is supported on the frame 6 in such a way as to be able to slide vertically on guide means 25 that is interposed between the prismatic body 24 and the frame 6.

On the prismatic body 24 a bracket 26 is hinged, according to a horizontal axis, that connects the base 116 of the rod-shaped member 16 to the prismatic body 24; between the bracket 26 and the prismatic body 24 contrast elastic means 27 is interposed that comprises an appendage 28 that extends relatively fixed from the bracket 26 to beyond the hinge point indicated by 29, and which is folded towards the prismatic body 24: between the latter and the appendage 28 a compression-reactive coiled spring 30 is positioned.

The guide means 25 comprises a pair of bars 31 that are vertically supported on the frame 6 between a pair of crosspieces 32 and 33 that unite two opposite legs 8 and corresponding through holes 24 that are longitudinally obtained in the body 24 and are suitable for slideably coupling with the bars 31.

The movement means 18 of the rod-shaped member 16 comprises a linear actuator 35 that has a first end 135 of the liner that is hinged on a fitting 36 placed underneath the upper plane 7 of the frame 2 and a second end 235 opposite the first end 135, which is connected to the prismatic body 24 by a transverse arm member 37.

The latter has an end 137 that is hinged on a fitting 38 positioned in a middle zone of one of the legs 8 that acts as a fulcrum and the opposite end 237 that is connected to the prismatic body 24 by a connecting rod 39 hinged on both and which enables the variations in length of the arm member 37 during the arc circumferal trajectory of the latter to be modified to push upwards or downwards the prismatic body 24 and the rod-shaped member 16 with it.

Operation of the extracting and inserting apparatus 1 is as follows: an operator grasps a carcass 3 of a tyre 4 containing a stiff ring 2 and places it on a horizontal position on the upper plane 7, between the stems 13 of the locking means 10 and with the bars 14 facing the edges of the upper plane 7 or on a side in which they do not interfere with the carcass 3.

The rod-shaped member 16 is then raised by actuating the actuating means 35 that contracts and lifts up the arm member 37, which rotates around its fulcrum hinge placed on the fitting 38 and indicated by the reference number 138, and slides upwards the prismatic body 24 guided on the pair of bars 31, lifting, as said, the rod-shaped member 16 until it passes through the aperture 9 and reaches the same level as the ring 2.

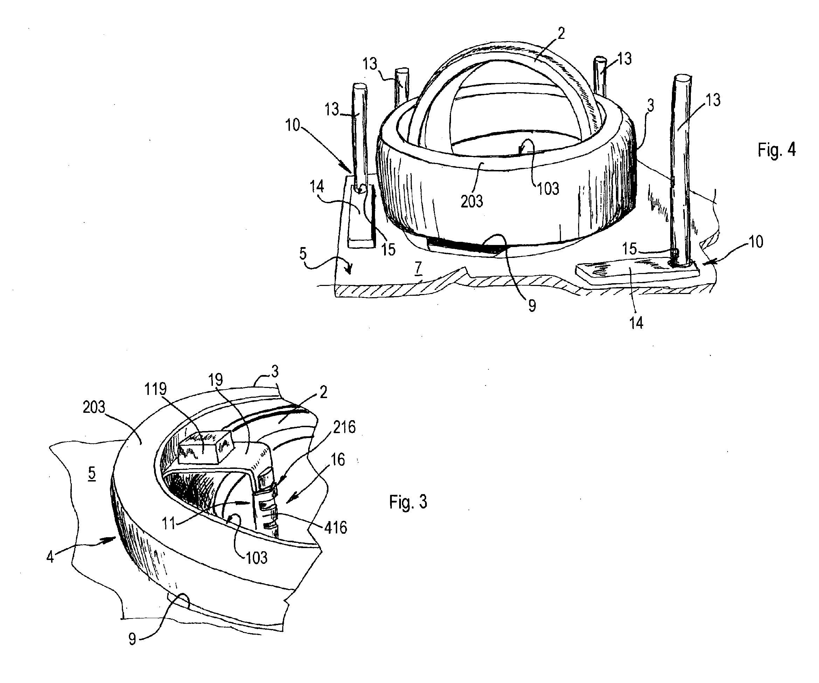

In this position, the operator rotates the hook member 19 around the longitudinal axis of the rod-shaped member 16, in such a way that the hook member 19 can grasp the stiff ring 2 transversely on an edge, as indicated in Figure 3.

Subsequently, the operator again actuates the actuator 35 on which it extends and pushes the arm member 37 downwards that drags with itself the prismatic body 24 and the rod-shaped member 16.

The stiff ring 2, pulled downwards by the hook member 19, starts to rotate on itself inside the carcass 3, automatically forming a pivot at two end points placed at its transverse diameter in relation to the hook member 19, which faces the outside of the stiff ring 2, until it becomes arranged transversely as shown in Figure 4.

The operator then rotates the hook member 19, by orientating it towards the inside of the upper part of the stiff ring 2 and adjusts the length of the rod-shaped member 16 in such a way as to bring the stopper 119 into contact with the latter.

The length is adjusted by rotating the internal rod 316 on itself in relation to the external rod 416 to extract the peg 23 from the slot 21 in which it was previously engaged.

The operator extracts the internal rod 316 upwards in relation to the external rod 416, guided by the pin 23 which slides in the corridor 22, until it takes the stopper 119 as close as possible to the internal surface of the stiff ring 2.

When this position has been reached, the operator again rotates the internal rod 316 in relation to the external rod 416 in the opposite direction to the previous direction and engages the pin 23 in a slot 21 that is nearer the top of the external rod 416.

When the length of the rod-shaped member 16 is fixed, the operator again actuates the actuator 35 by returning its stem, indicated by 235, upwards together with the arm member 37, to the prismatic body 24 and to the rod-shaped member 16.

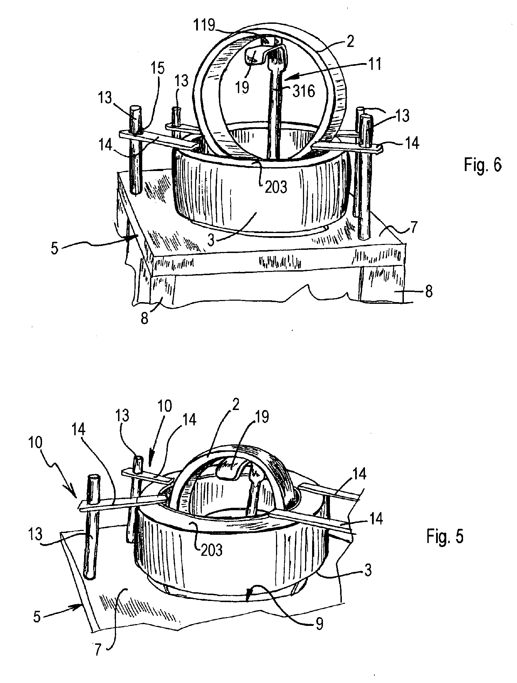

The hook member 19 then pushes the stiff ring 2 upwards (see figures 5 and 6), extracting it progressively from the carcass 3.

To retain the latter on the upper support plane 7 during the thrust exerted by the rod-shaped member 16, the operator lifts up the bars 14, sliding them on respective stems 13 and rotates them to the upper side 203 of the carcass 3, resting them thereupon.

If the thrust of the rod-shaped member 16 attempts to also lift the carcass 3, the bars 14 rotate upwards, locking on the respective stems 13 and also locking the carcass 3 on the upper plane 7.

Inserting the stiff ring 2 inside the carcass 3 comprises the following operations: the operator grasps the stiff ring 2 and places it transversely vertical to the carcass 3, resting on the side 203 of the latter and partially contained in the circular aperture 103.

Subsequently, he adjusts the length of the rod-shaped member 16 in such a way that the hook member 19 can grasp the stiff ring 2 in the internal lower zone passing through the aperture 9.

The operator actuates the actuator 35 by extending it and pulling the rod-shaped member 16 downwards: this enables the stiff ring 2 to be progressively inserted in a transverse position between the apertures 103 of the carcass 3.

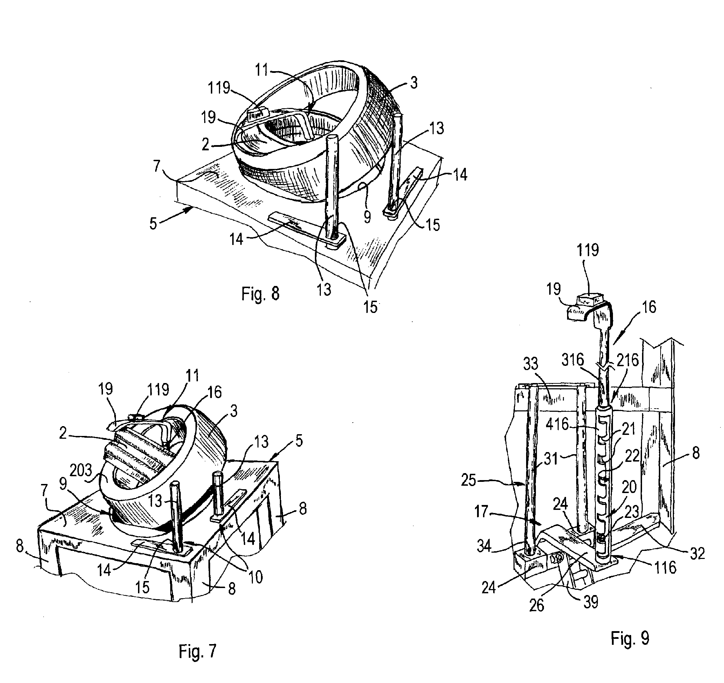

The operator then grasps the carcass and places it tilted in the aperture 9 of the upper plane 7, as can be seen in Figure 7; he then again adjusts the length of the rod-shaped member 16, as indicated previously, so that the hook member 19 can grasp the upper part of the stiff ring 2, passing through the openings 9 of the upper plane 7 and 103 of the sides 203.

When the hook member 19 has been positioned in such a way as to grasp the stiff ring 2 in its lower zone, the operator again actuates the actuator 35, which pulls down the hook member 19 which progressively rotates the stiff ring 2 in the carcass 3, acting as a pivot on the transverse diameter until the stiff ring 2 completely returns inside the carcass 3, as shown in figure 8.

## Claims

1. Extracting and inserting apparatus (1), particularly for extracting and inserting a stiff ring (2) from or into a tyre (4) carcass (3), **characterised in that** it comprises:
- support means (5) arranged to receive said carcass (3),
- traction and/or thrust means (11) arranged to act on said stiff ring (2) in such a way as to rotate it transversely in relation to said carcass (3) and extract it therefrom or insert it therein.

2. Extracting and inserting apparatus (1) according to claim 1 wherein said traction and/or thrust means (11) is connected inside said support means (5) with interposing articulation means (17).

3. Extracting and inserting apparatus (1) according to claim 1 wherein said support means (5) comprises a frame (6) that has a substantially horizontal upper support plane (7) and is provided below with members (8) resting on the ground, said upper plane (7) being provided with locking means (10) of a carcass (3) resting in a horizontal position and with a passage aperture (9) of said traction and/or thrust means (11), substantially aligned on conventional side apertures (103) of the sides (203) of said carcasses (3).

4. Extracting and inserting apparatus (1) according to claim 3 wherein said locking means (10) comprises at least a pair of pressing elements that are positionable in two positions, respectively a first intervention position pressed into contact with a side (203) of said tyre (3) and a rest position removed from said side (203).

5. Extracting and inserting apparatus (1) according to claim 3 or 4 wherein said pressing elements are arranged near a peripheral zone of said upper plane (7) and together define a rest zone of a carcass (3), traversed by said passage aperture (9).

6. Extracting and inserting apparatus (1) according to claim 4 wherein said pressing elements each comprise:
- a stem (13) extending upwards from said upper plane (7),
- a transverse bar (14) having at one end a hole (15) engaged on said stem (13) with limited clearance and being suitable to slide on said stem (13) parallel to itself and to rotate around said stem (13) to reach said side (203) of a carcass or be removed from the latter, said transverse bar (14) locking itself along said stem (13) when it is rotated upwards.

7. Extracting and inserting apparatus (1) according to any one of claims 1 to 4 wherein said traction and/or thrust means (11) comprises:
- a rod-shaped member (16) articulated on said frame (6) below said upper plane (7) with said articulation means (17) and passing through said passage aperture (9),
- alternating movement means (18) of said rod-shaped member (16) through said passage aperture (9), interposed between said frame (6) and a base end (116) of said rod-shaped member (16), the opposite end (216) of the latter being provided with a hook member (19) that is suitable for alternatively grasping or thrusting said stiff rings (2) into said carcasses (3).

8. Extracting and inserting apparatus (1) according to claim 3 or 7 wherein said articulation means (17) is placed inside said frame (6).

9. Extracting and inserting apparatus (1) according to claim 5 wherein said rod-shaped member (16) comprises at least two telescopically connected rods (316, 416) between which adjusting means (20) of the length of said rod-shaped member (16) is interposed.

10. Extracting and inserting apparatus (1) according to claim 9 wherein said adjusting means (20) of length comprises:
- a series of slots (21) that are arranged as a comb and transversely arranged in an external telescopic rod (416) and are connected together by a common longitudinal corridor (22),
- a corresponding pin (23) protruding from an internal telescopic rod (316) and suitable for selectively engaging in said slots (21) by passing along said corridor (22).

11. Extracting and inserting apparatus (1) according to claim 1 or 5 wherein said articulation means (17) comprises:
- a prismatic body (24) supported on said vertically movable frame (6),
- guide means (25) of said prismatic body (24) interposed between the latter and said frame (6),
- a bracket (26) connected to said lower end (116) of said rod-shaped member (16) and hinged on said prismatic body (24) with a substantially horizontal axis,
- elastic means (27) contrasting the rotation of said bracket (26), interposed between the latter and said prismatic body (24).

12. Extracting and inserting apparatus (1) according to claim 11 wherein said guide means (25) comprises:
- a pair of vertical bars (31) supported on said frame (6),
- corresponding through holes (34) obtained longitudinally in said prismatic body (24) and suitable for slidingly coupling with said bars (31).

13. Extracting and inserting apparatus (1) according to claim 7 wherein said moving means (18) comprises:
- at least a linear actuator (35) having a first end (135) hinged on said frame (6) and a second end (235) opposite said first end, connected to said prismatic body (24) with the interposition of an arm member (37),
- articulated connecting-rod means (39) to connect said arm member (37) to said prismatic body (24).
